# EUROPÄISCHE PATENTSCHRIFT

(11) **EP 0 551 836 B1**
(45) Veröffentlichungstag und Bekanntmachung des Hinweises auf die Patenterteilung: **02.08.1995**
(21) Anmeldenummer: 93100198.6
(22) Anmeldetag: 08.01.1993
(51) Int. Cl.: F16B 7/18, F16B 37/00, E06B 3/08, E04B 2/78

(54) **Schraubverbindung zwischen einer Profilschiene und einem Beschlag oder einem sonstigen Bauteil**
Screw joint between a profile and a fitting or other structural member
Raccord à vis entre un profilé et une ferrure ou un autre élément de construction

(30) Priorität: 11.01.1992 DE 4200535
(43) Veröffentlichungstag der Anmeldung: 21.07.1993
(73) Patentinhaber: SCHÜCO International KG, D-33609 Bielefeld (DE)
(72) Erfinder: Diekmann, Bernd, Dipl.-Ing, W-4802 Halle/Westfalen (DE); Henkel, Michael, W-4802 Halle/Westfalen (DE)
(74) Vertreter: Stracke, Alexander, Dipl.-Ing.

(56) Entgegenhaltungen:
- EP-A- 0 049 694
- DE-A- 1 775 811
- DE-A- 1 923 669
- DE-A- 3 038 341
- FR-A- 1 550 935
- NL-C- 104 268

## Beschreibung

Die Erfindung bezieht sich auf eine Schraubverbindung zwischen einer mit einer Verankerungsnut versehenen Profilschiene und einem Beschlag oder einem sonstigen Bauteil gemäß der im Oberbegriff des Anspruches 1 angegebenen Art.

Aus der DE-A-17 75 811 ist eine derartige Schraubverbindung bekannt. Ein Metallprofil ist dabei mit einer hinterschnittenen Verankerungsnut versehen, in die eine plastisch und/oder elastisch verformbare Profilschiene mit einer Schraubnut eingeschoben ist. Die Schraubnut erstreckt sich vom Nutgrund gleichmäßig bis an die Oberkante der Profilschiene. Mittels in die Schraubnut der Profilschiene eingreifende Schrauben wird ein weiteres Bauteil mit dem Metallprofil verbunden. Die Profilschiene kann aufgrund ihrer Ausbildung nur in die hinterschnittene Nut eingeschoben werden.

Aus der DE-A-30 38 341 ist ein Dübelelement für die Verbindung von Blechen bekannt. Das Dübelelement hat einen oberen Auflagekranz, der die axiale Begrenzung bestimmt. Das Dübelelement wirkt aufgrund der auftretenden Toleranzen in bezug auf die Blechdicke insbesondere verformter Bleche ausgleichend. Die seitliche Ausrichtung des Dübelelementes in der Öffnung ist nicht eindeutig definiert.

Darüber hinaus werden häufig unter Verwendung von selbstschneidenden bzw. gewindeformenden Schrauben die jeweils zu befestigenden Bauteile an dem jeweiligen Profil durch Bohren eines Loches festgeschraubt. Zum Teil sind die durchbohrten Wandungen aufgrund ihrer Dimensionierung für eine einwandfreie Schraubverbindung nicht geeignet, zum Teil werden auch Undichtigkeiten erzeugt, über die Feuchtigkeit in das Profil gelangen kann. Durch das Einbringen der Bohrungen können auch Profilwandungen beschädigt werden, die als Energie- bzw. Mediumsträger benutzt werden, wie dies bei Maschinenbausystemen der Fall ist.

Der Erfindung liegt die Aufgabe zugrunde, eine kostengünstige Schraubverbindung der eingangs genannten Art zu gestalten, bei der die Verbindungsschrauben an einer beliebigen Stelle der Verankerungsnut auch im Rahmen einer Nachrüstung angebracht werden können, und die Voraussetzungen für die Positionierung, Zentrierung und Ausrichtung der Verbindungsschraube zu schaffen.

Diese Aufgabe wird durch die Merkmale des Anspruchs 1 gelöst.

Der Profilabschnitt, die Profilabschnitte oder das Zusatzprofil können nunmehr in die Verankerungsnut der Profilschiene eingeschoben oder vor allem eingeschnäppt werden.

In die Schraubnut der Profilabschnitte oder des Zusatzprofils können selbstschneidende bzw. selbstformende Schrauben an beliebiger Stelle eingesetzt werden, ohne daß es hierzu mechanischer Vorarbeiten bedarf.

Weitere Ausgestaltungen der Erfindung ergeben sich aus den Unteransprüchen.

Ausführungsbeispiele der Erfindung sind in den Zeichnungen dargestellt. Es zeigen:
- Fig. 1: eine Schraubverbindung zwischen einem plattenförmigen Bauteil und einer im Maschinenbau eingesetzten Profilschiene im Schnitt,
- Fig. 2: die Vergrößerung eines Ausschnitts aus der Fig. 1,
- Fig. 3: die in der Fig. 1 dargestellte Schraubverbindung in perspektivischer Darstellung und
- Fig. 4: eine Schraubverbindung zwischen zwei Fensterprofilen.

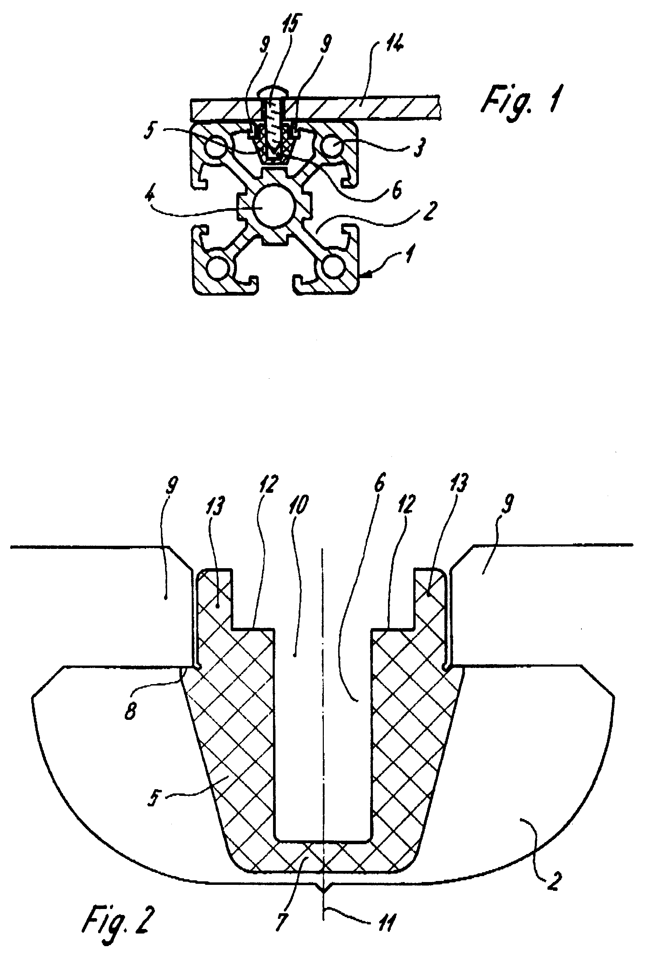

In der Fig. 1 ist eine Profilschiene 1 aus einem Maschinenbauprogramm dargestellt, die an allen vier Seiten mit einer Verankerungsnut 2 ausgerüstet ist. In den Eckbereichen der Profilschiene 1 sind Schraubkanäle 3 sowie im Zentrum ein Kanal 4 vorgesehen, der sowohl als Schraubkanal als auch als medienführender Kanal verwendet werden kann.

In eine Verankerungsnut 2 können Profilabschnitte 5 oder ein durchgehendes Zusatzprofil eingesetzt werden, wobei die Profilabschnitte 5 oder das Zusatzprofil eine Schraubnut 6 aufweisen, die durch einen Nutboden 7 begrenzt wird. Die Schraubnut 6 ist in den in den Zeichnungen dargestellten Ausführungsbeispielen im Querschnitt rechteckförmig ausgebildet. Der Profilabschnitt 5 oder das nicht dargestellte Zusatzprofil weist einen U-förmigen Gesamtquerschnitt auf, der sich zum Nutboden 7 hin verjüngt. Am oberen Ende der keilförmigen Kontur des Profilabschnitts 5 sind Anlageflächen 8 vorgesehen, die Randleisten 9 der Verankerungsnut 2 hintergreifen.

In dem dargestellten Ausführungsbeispiel sind die Profilabschnitte 5 form- und/oder materialelastisch ausgebildet und können in die Verankerungsnut 2 eingefedert werden. Die Lage der Profilabschnitte 5 nach der Einfederung in die Verankerungsnut 2 ist in den Figuren aufgezeigt.

Zur Erreichung einer Materialfederung der Profilabschnitte 5 können diese aus Kunststoff oder Aluminium gefertigt sein.

Aus der Fig. 2 ergibt sich, daß die längsseitige Öffnung 10 der Schraubnut 6 durch winklig zur Mittelebene 11 des Profilabschnitts 5 oder des Zusatzprofils sich erstreckende Flächen 12 begrenzt ist. Von diesen Flächen gehen parallel zur Mittelebene 11 verlaufende Randstege 13 aus.

Bei dem Ausführungsbeispiel nach den Fig. 1 und 3 ist die Profilschiene 1 mit einem plattenförmigen Bauteil 14 durch Schrauben 15 verbunden.

Durch Einschrauben einer Schraube 15 in die Schraubnut 6 eines von oben in die Verankerungsnut 2 eingeschobenen oder eingeschlagenen Profilabschnitts 5 werden die oberen Schenkel des Profilabschnitts 5 auseinandergedrückt und kommen mit ihren Randstegen 13 an den oberen Wandungen der Verankerungsnut 2 zur Anlage, wodurch auch die widerhakenartige Untergreifung der Randleisten 9 gesichert ist.

Aus der perspektivischen Darstellung nach der Fig. 3 ergibt sich, daß die Positionierung der Profilabschnitte 5 nicht sehr genau zu erfolgen braucht. Die Schraube 15 kann an jeder Stelle des Profilabschnitts 5 in die Schraubnut 6 ohne Vorarbeiten eingedreht werden.

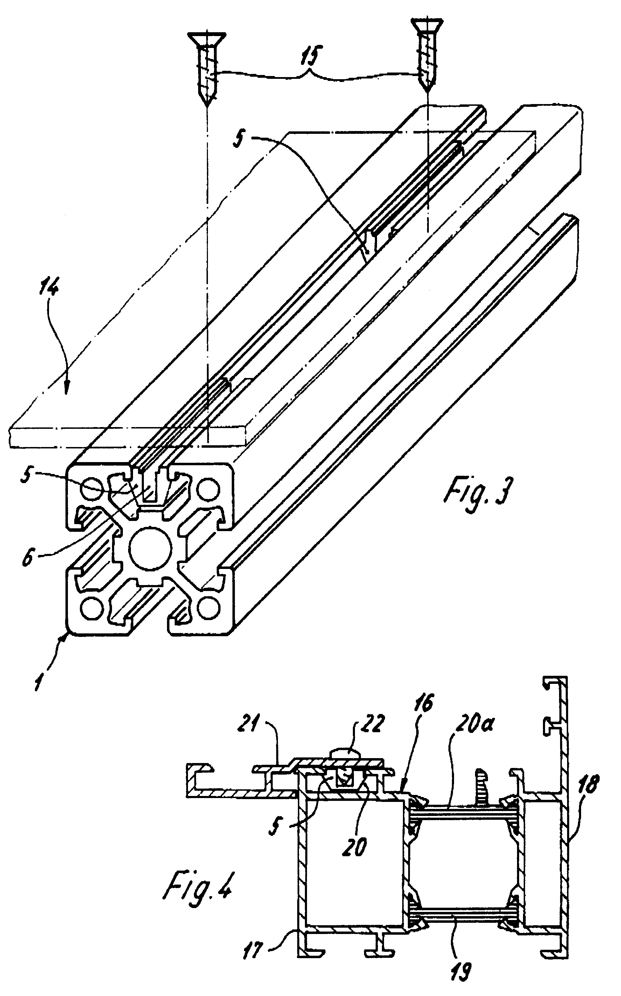

Die Fig. 4 zeigt ein Fensterprofil 16, das als wärmegedämmtes Verbundprofil ausgeführt ist und aus den Metallschalen 17 und 18 sowie dazwischen angeordneten Isolierstäben 19,20a besteht, die Metallschale 17 weist eine Verankerungsnut 20 auf, in die Profilabschnitte 5 eingesetzt sind.

Mit dem Fensterprofil 16 ist ein Profil 21 verbunden und zwar mittels Schrauben 22, die in die Schraubnut 6 des Profilabschnitts 5 bzw. der Profilabschnitte 5, die in Abstand voneinander angeordnet sind, eingeschraubt sind.

Durch den Einsatz der Profilabschnitte 5 wird ein Durchbohren der darunterliegenden Wandung des Fensterprofils 16 und damit das mögliche Eindringen von Feuchtigkeit verhindert.

Sofern die Profilabschnitte 5 bzw. das Zusatzprofil aus einem metallischen Werkstoff mit geringen elastischen Rückfederungsmöglichkeiten gefertigt sind, ist dies unerheblich, da durch das Einschrauben der Schrauben 15 die Profilabschnitte 5 ohnehin in die endgültige belastbare Position auseinandergespreizt werden.

### Bezugszeichen

- 1: Profilschiene
- 2: Verankerungsnut
- 3: Schraubkanal
- 4: Kanal
- 5: Profilabschnitt
- 6: Schraubnut
- 7: Nutboden
- 8: Anlagefläche
- 9: Randleiste
- 10: Öffnung
- 11: Mittelebene
- 12: Fläche
- 13: Randsteg
- 14: Bauteil
- 15: Schraube
- 16: Fensterprofil
- 17: Metallschale
- 18: Metallschale
- 19: Isolierstab
- 20: Verankerungsnut
- 20a: Isolierstab
- 21: Profil
- 22: Schraube

## Patentansprüche

1. Schraubverbindung zwischen einer mit einer Verankerungsnut (2, 20) versehenen Profilschiene (1, 16) und einem Beschlag (14, 21) oder einem sonstigen Bauteil, wobei in die Verankerungsnut (2, 20) der Profilschiene (1, 16) mindestens ein Profilabschnitt (5) oder ein Zusatzprofil eingesetzt ist, dieser Profilabschnitt (5) oder dieses Zusatzprofil eine Schraubnut (6) zur Aufnahme der Verbindungsschraube (15) oder der Verbindungsschrauben (15) aufweist und der Profilabschnitt (5) oder das Zusatzprofil form- und/oder materialelastisch ausgebildet ist, **dadurch gekennzeichnet,** daß der Profilabschnitt (5) oder das Zusatzprofil in die Verankerungsnut (2, 20) einfederbar ist, daß die längsseitige Öffnung (10) der Schraubnut (6) durch winkelig zur Mittelebene (11) des Profilabschnitts (5) oder des Zusatzprofils sich erstreckende Flächen (12) begrenzt ist und von diesen Flächen Parallel zur Mittelebene (11) verlaufende Randstege (13) ausgehen.

2. Schraubverbindung nach Anspruch 1, dadurch gekennzeichnet, daß der Profilabschnitt (5) oder das Zusatzprofil im Querschnitt U-förmig ausgebildet ist, mittig die mit einem Nutboden (7) ausgerüstete Schraubnut (6) aufweist, der Querschnitt sich zum Nutboden (7) hin verjüngt und am oberen Ende der keilförmigen Kontur Anlageflächen (8) vorgesehen sind, die hinterschnittene Flächen der Verankerungsnut (2) hintergreifen.

3. Schraubverbindung nach Anspruch 1 oder 2, dadurch gekennzeichnet, daß die Schraubnut (6) im Querschnitt rechteckförmig ist.

4. Schraubverbindung nach einem der vorhergehenden Ansprüche, dadurch gekennzeichnet, daß der Profilabschnitt (5) oder das Zusatzprofil aus Kunststoff oder aus Aluminium gefertigt sind.

## Claims

1. A screw connection between a profile bar (1, 16) provided with an anchoring groove (2, 20) and a fitting (14, 21) or another structural member, wherein at least one profile portion (5) or an additional profile is fitted into the anchoring groove (2, 20) of the profile bar (1, 16), said profile portion (5) or said additional profile has a screw groove (6) for receiving the connecting screw (15) or the connecting screws (15), and the profile portion (5) or the additional profile is of an elastic nature in respect of shape and/or material, characterised in that the profile portion (5) or the additional profile can be spring-fitted into the anchoring groove (2, 20), that the opening (10) at the longitudinal side of the screw groove (6) is defined by surfaces (12) which extend at an angle relative to the central plane (11) of the profile portion (5) or the additional profile and edge web portions (13) extend from said surfaces and run parallel to the central plane (11).

2. A screw connection according to claim 1 characterised in that the profile portion (15) or the additional profile is of a U-shaped configuration in cross-section and centrally has the screw groove (6) which is provided with a groove bottom (7), the cross-section tapers inwardly towards the groove bottom (7) and provided at the upper end of the wedge-shaped contour are contact surfaces (8) which engage behind surfaces of an undercut configuration of the anchoring groove (2).

3. A screw connection according to claim 1 or claim 2 characterised in that the screw groove (6) is of rectangular configuration in cross-section.

4. A screw connection according to one of the preceding claims characterised in that the profile portion (5) or the additional profile are made from plastics material or aluminium.

## Revendications

1. Assemblage vissé entre un rail profilé (1, 16) muni d'une rainure d'ancrage (2, 20) et une armature (14, 21) ou autre élément de construction, au moins une section de profilé (5) ou un profilé supplémentaire étant inséré dans la rainure d'ancrage (2, 20) du rail profilé (1, 16), cette section de profilé (5) ou ce profilé supplémentaire présentant une rainure pour vis (6) pour recevoir la vis d'assemblage (15) ou les vis d'assemblage (15) et la section de profilé (5) ou le profilé supplémentaire étant conformé avec une élasticité de forme ou de matériau, caractérisé en ce que la section de profilé (5) ou le profilé supplémentaire peut être mis sous contrainte élastique dans la rainure d'ancrage (2, 20), en ce que l'ouverture longitudinale (10) de la rainure pour vis (6) est délimitée par des surfaces (12) s'étendant selon un angle par rapport au plan médian (11) de la section de profilé (5) ou du profilé supplémentaire, et des barres de bordure (13) s'étendant parallèlement au plan médian (11) partent de ces surfaces.

2. Assemblage vissé selon la revendication 1, caractérisé en ce que la section de profilé (5) ou le profilé supplémentaire est conformé selon une section transversale en U, présente en position médiane la rainure pour vis (6) équipée d'un fond de rainure (7), la section transversale se rétrécit en direction du fond de rainure (7) et des surfaces d'appui (8) sont prévues à l'extrémité supérieure du contour cunéiforme, lesquelles saisissent la surface en contre-dépouille de la rainure d'ancrage (2).

3. Assemblage vissé selon la revendication 1 ou 2, caractérisé en ce que la rainure pour vis (6) a une section transversale rectangulaire.

4. Assemblage vissé selon l'une des revendications précédentes, caractérisé en ce que la section de profilé (5) ou le profil supplémentaire est fabriqué en aluminium ou en matière synthétique.
